# EUROPÄISCHE PATENTSCHRIFT

(11) **EP 0 676 362 B1**
(45) Veröffentlichungstag und Bekanntmachung des Hinweises auf die Patenterteilung: **26.05.1999**
(21) Anmeldenummer: 94103546.1
(22) Anmeldetag: 09.03.1994
(51) Int. Cl.: B66B 23/22

(54) **Beleuchtungsvorrichtung mit Lichtleitern für Fahrtreppen oder Fahrsteige**
Illumination appliance with optical fibres for escalators or moving walkways
Dispositif d'éclairage à fibres optiques pour escaliers roulant ou tapis roulant

(43) Veröffentlichungstag der Anmeldung: 11.10.1995
(73) Patentinhaber: INVENTIO AG, CH-6052 Hergiswil NW (CH)
(72) Erfinder: Kamschal, Wolfgang, Dipl.-Ing., A-2551 Enzesfeld (AT); Neszmerak, Wolfgang, A-1120 Wien (AT)

(56) Entgegenhaltungen:
- DE-A- 3 843 090
- DE-A- 4 209 505
- DE-U- 8 802 483

## Beschreibung

Die Erfindung bezieht sich auf eine Beleuchtungsvorrichtung mit Lichtleitern für Fahrtreppen oder Fahrtsteige welche ein bewegliches Stufen- bzw. Palettenband enthalten und mindestens eine seitlich daneben angeordnete senkrechte Balustrade sowie einen an derem oberen Ende auf einer Schiene geführten Handlauf aufweisen, wobei mit mindestens teilweise entlang der Balustrade sich erstreckenden Lichtleitern, Licht von einer oder mehreren zentralen Lichtquellen an Beleuchtungspunkte an der Fahrtreppe oder dem Fahrsteig geführt wird. Solche Beleuchtungen dienen allgemein dazu, bei Fahrtreppen oder Fahrtsteigen die Sicherheit für den Benutzer zu erhöhen, und die dekorative Aufmachung mit speziellen Lichteffekten zu verbessern.

Üblicherweise sind die Beleuchtungen bei Fahrttreppen und Fahrsteigen in Form von langgestreckten Leuchtstofflampen ausgebildet, die unter dem Handlauf oder in den Balustraden versenkt angeordnet sind, wobei mit der versenkten Anordnung auch eine gewisse Vandalensicherheit gewährleistet werden soll. Solche herkömmliche Beleuchtungseinrichtungen eignen sich aber schlecht zum Einbau in Fahrtreppen und Fahrtsteige mit sogenannten Schmalprofil-Balustraden, die wegen ihres kleinvolumigen Profiles unter dem Handlauf sehr elegant wirken und sich deshalb zunehmender Beliebtheit erfreuen. Der Einbau langgestreckter, grossvolumiger Leuchtstofflampen in das schmale Balustradenprofil ergäbe konstruktive Probleme und vermöchte auch aesthetisch nicht zu befriedigen.

Andererseits sind aber Beleuchtungsvorrichtungen bekannt geworden, die auch bei Schmalprofil-Balustraden eine adäquate Beleuchtung ermöglichen, ohne dabei den optischen Gesamteindruck des besonders zarten Balustradenprofiles zu beeinträchtigen oder dessen dekorative Wirkung zu schmälern. Solche Lösungen bestehen im wesentlichen aus unterhalb des Handlaufes oder im Balustradensockel eingelassenen Leuchten geringer Abmessungen. Bisher wurden für diesen Zweck meist kleinere Niederspannungsröhren oder auch Halogenlampen verwendet.

Beiden haftet der Nachteil an, dass eine relativ grosse Anzahl Leuchteinheiten verwendet werden muss, was bei deren unterschiedlicher Lebensdauer zu häufigen zusätzlichen Servicearbeiten an den Fahrtreppen bzw. Fahrsteigen führt. Halogenlampen stellen den Konstrukteur zudem vor Wärmeprobleme, da sie wegen ihrer relativ hohen Wärmeabstrahlung eine sehr gute Isolation erfordern, damit sich keine heissen Anlageteile ausbilden, mit denen die Fahrtreppen- bzw. Fahrsteigbenutzer in Berührung kommen können. Zudem müssen Niederspannungsröhren wie Halogenlampen so installiert sein, dass sie problemlos ausgetauscht werden können. Auch bleibt der für die Trittsicherheit wichtige Stufenbereich oft nur ungenügend beleuchtet, sodass es notwendig werden kann, im Bereich der Kammplatte für den Ein- bzw. Ausstieg zusätzliche Beleuchtungsvorrichtungen zu montieren. Solcherart nachgebesserte Beleuchtungen beeinträchtigen das elegante Erscheinungsbild der Schmalprofil-Balustraden und werden oft als reine Zweckbeleuchtungen empfunden.

Weiter ist aus der Deutschen Patentschrift 42 09 505 eine Rolltreppe mit einer Balustrade sowie einem an der Oberkante derselben geführten Handlauf bekannt geworden, bei der in einem rechteckigen Hohlraum unterhalb des Handlaufes ein feststehender, aus lichtleitenden Fasern bestehender Lichtleiter montiert ist. Nach unten hin ist der im Querschnitt rechteckige Hohlraum durch eine transparente Plexiglasabdeckung abgeschlossen. Der rechteckige Lichtleiter besteht aus einer Vielzahl einzelner Lichtfasern, die zusammen das von einer Lichtquelle erzeugte und an dessen Stirnfläche eingespeiste Licht in Längsrichtung durch den Lichtleiter führen. Die einzelnen Lichtfasern verlaufen aber nicht exakt in Längsrichtung des Lichtleiters sondern in einem extrem spitzen Winkel dazu, sodass sie auch in diesem extrem spitzen Winkel auf die nach unten gerichtete Lichtaustrittsfläche des Lichtleiters auftreffen. Der rechteckige Querschnitt des Lichtleiters nimmt also über die Länge des Lichtleiters nach Art eines Keiles ab, wobei die jeweils zu einem Vollquerschnitt verbleibende Querschnittsfläche von einer Gegenlage ausgefüllt ist. Gegenlage wie lichtleitende Fasern sind biegsam, sodass der Lichtleiter parallel zum endlos umlaufenden Handlauf feststehend im darunterliegenden, im Querschnitt rechteckförmigen Hohlraum verlegt werden kann. Das an der Stirnfläche von der Lichtquelle eingespeiste Licht wird in den lichtleitenden Fasern so lange weitergeleitet, bis es unter spitzem Winkel auf die den Lichtleiter nach unten abdeckende transparente Plexiglasabdeckung auftrifft und von dort parallel zur Balustradenwandfläche kontinuierlich in den Fussbereich gestrahlt wird.

Da der verwendete Lichtleiter entlang des Handlaufes über die volle Länge des oberen Balustradenrandes verläuft ist die auf der Trittbahn erzielbare Ausleuchtung von der Lichtführung her vorgegeben und hinsichtlich der Lichtstärke grundsätzlich beschränkt. Es dürfte deshalb schwierig sein, mit dieser Balustradenbeleuchtung die Trittbahn in allen Fällen hinsichtlich Gefahrenbeseitigung oder dekorativer Aufmachung ausreichend auszuleuchten. Andererseits führt eine Ausgestaltung des Lichtleiters im Sinne einer Erhöhung der Lichtausbeute zu einem relativ breiten Aufbau, der sich schlecht zum Einbau in das schmale Profil von Schmalprofil-Balustraden eignet. Weiter handelt es sich beim vorgesehenen Lichtleiter um ein faseroptisches Element, das aufgrund seiner Integration in den Handlauf für jede Anlage massgeschneidert ist. Eine Anpassung an unterschiedliche Bauformen oder Lichtverhältnisse ist kaum möglich, sodass die Anwendung eines solchen Lichtleiters hinsichtlich Flexibilität und Freizügigkeit stark eingeschränkt ist. Hier will die Erfindung Abhilfe schaffen.

Dementsprechend ist es die Aufgabe der antragsgemässen Erfindung eine Beleuchtungseinrichtung für Fahrtreppen und Fahrsteige vorzuschlagen, die sich zum Einbau in Schmalprofil- und alle anderen bekannten Balustraden eignet und deren dekorative Aufmachung sowie deren eleganter optischer Gesamteindruck, durch gestalterische Vorteile und spezielle Lichteffekte verstärkt. Die antragsgemässe Beleuchtungseinrichtung soll insbesondere auch bei Schmalprofil-Balustraden eine dem beweglichen Stufen- oder Palettenband nahe und folglich wirksame Beleuchtung gewährleisten und zur Verwendung im Aussenbereich bei Feuchtigkeit und Nässe geeignet sein.

Gelöst wird die Aufgabe erfindungsgemäss mit den Mitteln, wie sie im unabhängigen Patentanspruch gekennzeichnet sind. Vorteilhafte Weiterbildungen sind in den abhängigen Ansprüchen angegeben.

Die durch die antragsgemässe Erfindung erzielten Vorteile ergeben sich im wesentlichen aus dem Umstande, dass die passiven Lichtquellen als integrale Einheiten ausgebildet sind, in denen keine Wärme erzeugt wird und die ohne Netzanschluss betrieben werden und die gegen Feuchtigkeit und Nässe weitgehend resistent sind.

Es besteht demnach keine Gefahr, dass Balustraden oder Handläufe unzulässig erwärmt werden, oder dass die zu transportierenden Personen mit Spannung führenden elektrischen Einrichtungen, wie Fassungen oder Kabel, in Berührung kommen. Bei Anwendung im Aussenbereich sind Kurzschlüsse durch Feuchtigkeit oder Nässe ausgeschlossen.

Weiter stellt die antragsgemässe Erfindung eine einstellbare und lösbare Konstruktion dar, die nach der Montage einfach und rasch an geänderte Verhältnisse angepasst werden kann, wie sie sich aus baulichen Umstellungen oder geänderten Lichtverhältnissen ergeben können. Eine derart ausgebildete Beleuchtungseinrichtung besitzt eine Flexibilität in der Anwendung und eine Freiheit in der Gestaltung, wie sie mit massgeschneiderten Beleuchtungen nicht erreicht werden können.

Ferner hat sich gezeigt, dass die wesentlichen Elemente der antragsgemässen Erfindung, nämlich die zentrale, aktive Lichtquelle, die diskreten Lichtleiter, sowie die kompakten passiven Lichtquellen funktions- und nicht anlagebezogen sind, also ungeachtet der baulichen Ausgestaltung einer Anlage verwendet werden können. Hinsichtlich der Beleuchtungselemente wie deren Verbindung kann von einem bausteinartigen Aufbau gesprochen werden. Für die unterschiedlichen Ausführungsvarianten von Fahrtreppen und Fahrsteigen können deshalb immer die gleichen, in Normgrössen serienmässig hergestellten Einzelteile verwendet werden. Daraus ergibt sich der Vorteil einer einfachen Fertigung sowie einer unkomplizierten Disposition des Materialbedarfs. Die Anpassung an den einzelnen Anwendungsfall erfolgt über die diskreten Lichtleiter durch entsprechende Positionierung der passiven Lichtquellen.

Auch sind die bausteinartigen, die erfindungsgemässe Beleuchtungsvorrichtung ausmachenden Elemente so ausgebildet, dass sie sich an Ort und Stelle leicht montieren und auch wieder leicht demontieren lassen und ein verhältnismässig geringes Gewicht aufweisen. Die antragsgemässe Beleuchtungsvorrichtung eignet sich deshalb vortrefflich zum Einbau an Ort und Stelle, wo wegen baulicher oder anderer Erschwernisse oft unter schwierigen Bedingungen gearbeitet werden muss.

Als vorteilhaft hat sich auch erwiesen, dass durch die dezente Licht-und Schattenwirkung der im Abstand bis ca. 30 cm angeordneten passiven Lichtquellen ein sehr lebendiges Bild des Stufen - bzw. Palettenbandes entsteht.

Diese passiven Lichtquellen erzeugen selber weder Licht noch Wärme sondern strahlen das von den zugeordneten Lichtleitern empfangene Licht auf das Stufenband. Da sie folglich keiner Abnützung oder Alterung unterliegen, besitzen sie eine sehr grosse Lebensdauer und erfordern praktisch keinen Unterhalt. Dies hat sich in Anbetracht der Vielzahl der verwendeten passiven Lichtquellen sowie ihrer oft verdeckten Montage im Balustradensockel als sehr vorteilhaft erwiesen. Anders dagegen die einzelne oder mehrere zentrale, aktive Lichtquellen, in der das zum Betrieb der Lichtleiter erforderliche Licht und damit viel Wärme erzeugt wird. Es handelt sich dabei aber jeweils um einzelne Leuchten, die in geeigneter Weise gekühlt werden können, und die an leicht zugänglicher Stelle - z.B. im Maschinenraum - montiert sind. Ein allfälliger Lampenwechsel ist daher sehr einfach und rasch möglich, und dies, ohne hierzu die Treppenverkleidung demontieren zu müssen.

Die Erfindung ist im folgenden anhand der Beschreibung sowie der Zeichnung in ihrer Anwendung bei einer Fahrtreppe mit beidseitigen Schmalprofil-Balustraden erläutert, wobei eine im Balustradensockel angeordnete Stufenbandbeleuchtung vorgesehen ist. Die hier gezeigte Vorrichtung ist jedoch allgemein anwendbar, wenn bei Fahrtreppen oder Fahrsteigen mit Glasverkleidung flächige Elemente z. B. in der Unteransicht oder einzelne Konstruktionselemente innerhalb der Anlage beleuchtet werden sollen. In der lediglich diese Stufenbandbeleuchtung als Anwendungsbeispiel der Erfindung darstellenden Zeichnung zeigen
- Figur 1:: schematisch, Disposition und prinzipieller Aufbau der erfindungsgemässen Beleuchtungsvorrichtung für die Beleuchtung einer Trittstufe aus dem Balustradensockel.
- Figur 2:: in Draufsicht und teilweise im Vertikalschnitt eine Fahrtreppe mit Schmalprofil-Balustraden, wobei zur raumdiskreten Beleuchtung des beweglichen Stufenbandes die passiven Lichtquellen der erfindungsgemässen Beleuchtungsvorrichtung in den beiden Balustradensockeln installiert sind.

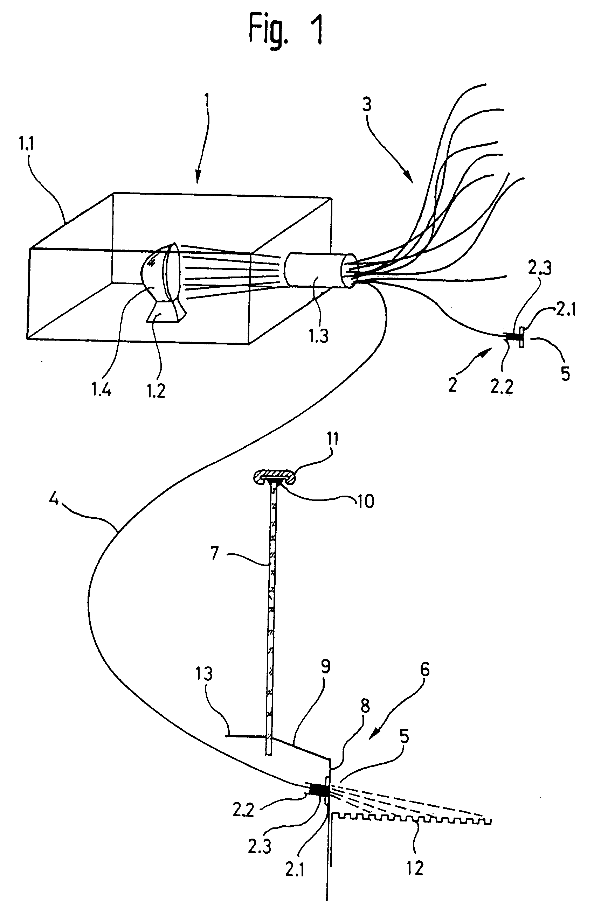

Die Figur 1 veranschaulicht schematisch die einzelnen Komponenten sowie den Aufbau der antragsgemässen Beleuchtungsvorrichtung, die in der gezeigten Ausführungsform im wesentlichen aus einer aktiven Lichtquelle 1, einer Vielzahl passiver Lichtquellen 2 sowie einem dazwischen geschalteten faseroptischen Lichtübertragungsnetz 3 besteht.

Die aktive Lichtquelle 1 ist vorzugsweise an zentraler Stelle der Fahrtreppenanlage installiert und enthält in einem Gehäuse 1.1 eine Leuchte 1.2, die Licht hoher Intensität erzeugt, das im Lichtleiteranschluss 1.3 in die diskreten Lichtleiter 4 des faseroptischen Lichtübertragungsnetzes 3 eingespeist wird. Bei der Leuchte 1.2 handelt es sich z.B. um eine geeignete Leuchtstoffröhre oder um eine Halogenlampe, die zur Erhöhung der Lichtausbeute mit einer lichtreflektierenden Spiegelfläche 1.4 hinterlegt sein kann. Zusätzlich ist wegen der mit der Lichterzeugung verbundenen grossen Wärmeleistung eine geeignete Kühlung vorgesehen. Das faseroptische Lichtübertragungsnetz 3 stellt die lichttechnische Verbindung von der aktiven Lichtquelle 1 zu den einzelnen Beleuchtungspunkten 5 in der Fahrtreppe 6 her. Hierzu ist jeder diskrete Lichtleiter 4 einerends am gemeinsamen Lichtleiteranschluss 1.3 der aktiven Lichtquelle 1 angeschlossen und anderends mit einer einzelnen, ihm zugeordneten passiven Lichtquelle 2 im Beleuchtungspunkt 5 verbunden. Pro Lichtleiter 4 sind also nur zwei Anschlüsse vorgesehen wodurch für das Lichtübertragungsnetz 3 eine hohe Zuverlässigkeit gewährleistet ist. Die diskreten Lichtleiter 4 übertragen also das von der aktiven Lichtquelle 1 erzeugte und an ihren Stirnflächen eingespeiste Licht im wesentlichen in ihren Längsrichtungen zu den passiven Lichtquellen 2, wo es zur Beleuchtung der Fahrtreppe 6 abgestrahlt wird. Die passiven Lichtquellen 2 weisen je eine Montagevorrichtung 2.1 auf, mit denen sie an geeigneten Beleuchtungspunkten 5 der Fahrtreppe 6 - im Anwendungsbeispiel der Fig.1 im Sockelblech 8 der Balustrade 7 - montiert werden können. An den Eingängen der passiven Lichtquellen 2 erfolgt der Anschluss der Lichtleiter 4 je mittels einer Lichtleiterfassung 2.2 und an den Ausgängen ist zur Abstrahlung des empfangenen Lichtes je eine integrierte Optik 2.3 vorgesehen. Sowohl die Lichtleiterfassung 2.2 mit dem angeschlossenen Lichtleiter 4 als auch die integrierte Optik 2.3 enthalten keine spannungführenden oder wärmeerzeugenden Teile, sodass die passiven Lichtquellen 2 wie auch die ihnen das Licht zuführenden Lichtleiter 4 im Aussenbereich - bei Nässe und Feuchtigkeit - freizügig einsetzbar sind.

Die Funktion der antragsgemässen Beleuchtungseinrichtung ergibt sich aus der Zusammenschaltung ihrer Elemente. Im Anwendungsbeispiel der Fig. 1 wird das in der aktiven Lichtquelle 1 erzeugte Licht über die diskreten Lichtleiter 4 zu den passiven Lichtquellen 2 im Sockelblech 8 bzw. unter dem mittels eines Abdeckprofiles 9 und einer Führungsschiene 10 auf der Balustrade 7 aufgesezten biegsamen Handlauf 11 übertragen und von dort mittels der integrierten Optik 2.3 auf den Fussbereich der Balustrade 7, auf das äussere Abdeckprofil 13 oder in Richtung der stufenförmigen Plattform 12 gestrahlt.

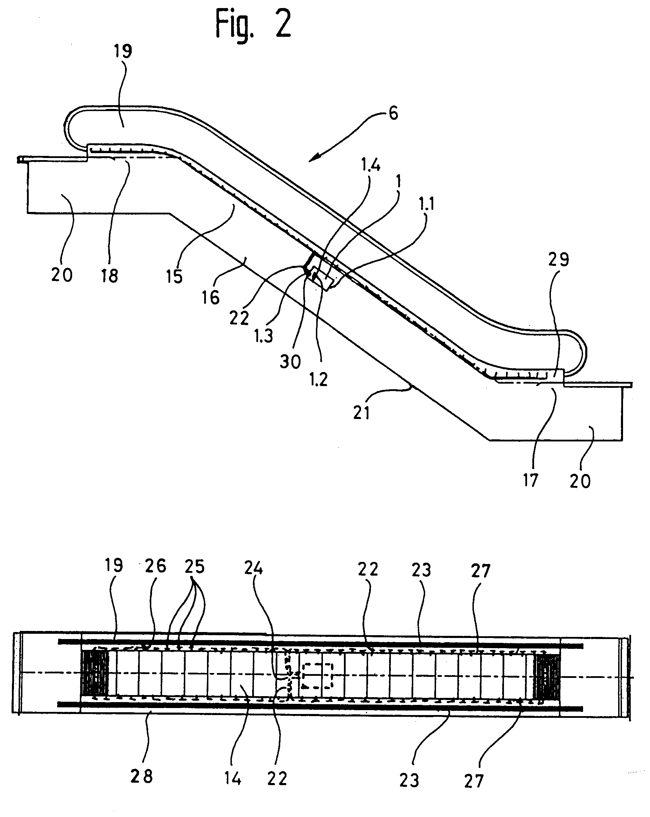

Figur 2 zeigt eine Ausführungsform der erfindungsgemässen Beleuchtungsvorrichtung in ihrer Anwendung zur Beleuchtung einer kontinuierlichen Fahrtreppe 6, die im wesentlichen ein bewegliches Stufenband 14 enthält, mit einer oberen lasttragenden Fahrstrecke 15, einer unteren Rücklaufstrecke 16, einem Wendeabschnitt 17 am untern Treppenende sowie einem Wendeabschnitt 18 am oberen Treppenende. Das bewegliche Stufenband 14 besteht aus einer Vielzahl von in einer endlosen Schleife an ihren beiden Seiten untereinander gelenkig verbundenen stufenförmigen Plattformen 12, die in Führungsschienen laufen und von einem auf einer motorgetriebenen Hauptwelle sitzenden, hier nicht weiter dargestellten oberen Kettenrad angetrieben werden. Im weitern ist diese Fahrtreppe 6 so ausgebildet und angetrieben, wie das dem auf dem Gebiete der Fahrtreppentechnik tätigen Fachmann geläufig ist.
Allerdings sind bei der vorliegenden kontinuierlichen Fahrtreppe 6 gemäss Fig. 2 die Balustraden 19 beidseits des beweglichen Stufenbandes 14 als Schmalprofil-Balustraden 7 ausgebildet, die - z. B. aus Kunststoff-oder Klarglasscheiben zusammengesetzt - transparent sein können. Wegen ihres besonders schmalen Profiles und auch wegen des eleganten optischen Gesamteindruckes eignen sie sich nicht zum Einbau konventioneller, grossvolumiger Leuchten. Entsprechend ist auch der mittels eines Abdeckprofiles 9 und einer Führungsschiene 10 auf der Balustrade 19 aufgesetzte biegsame Handlauf 11 schmal ausgebildet und der darunter liegende Hohlraum zu kleinvolumig, als dass herkömmliche Leuchten darin untergebracht werden könnten. Wie Fig. 2 erkennen lässt enthält die Beleuchtungsvorrichtung im vorliegenden Beispiel eine aktive Lichtquelle 1, die normalerweise mit einer geeigneten Kühlung versehen ist, und in der als Leuchte 1.2 eine beliebige Lampe ausreichend hoher Lichtstärke verwendet werden kann. Da trotz Kühlung mit erhöhter Temperatur und damit reduzierter Lebensdauer der Komponenten gerechnet werden muss, ist die aktive Lichtquelle 1 gut zugänglich z. B. innerhalb der Fahrtreppe 6 zwischen der oberen lasttragenden Fahrstrecke 15 und der Rücklaufstrecke 16 angebracht, sodass ein Ersatz der Leuchte 1.2 bei deren Ausfall oder zum Zwecke des vorsorglichen Unterhaltes leicht und rasch möglich ist, und dies ohne hierzu die Fahrtreppenverkleidung 20 oder die Untersichtsverkleidung 21 entfernen zu müssen.

Zum Betrieb der erfindungsgemässen Beleuchtungsvorrichtung muss das von der aktiven Lichtquelle 1 erzeugte Licht zu den an geeigneten Beleuchtungspunkten 5 in der Fahrtreppenanlage angebrachten passiven Lichtquellen 2 übertragen werden. Hierzu dient das faseroptische Lichtübertragungsnetz 3, bestehend aus den diskreten Lichtleitern 4. Diese sind beidseits des beweglichen Stufenbandes 14 je zu einem strangförmigen Lichtleiterbündel 22 zusammengefasst die in den Sockelkanälen 23 verlegt sind und über Abzweigungen 24 mit den einzelnen passiven Lichtquellen 2 in Verbindung stehen. Im vorliegenden Ausführungsbeispiel ist die Neuerung als Stufenbandbeleuchtung im Sockel der Fahrtreppe 6 ausgebildet. Dementsprechend sind die passiven Lichtquellen 2 in Lichtauslässen 27 im Sockelblech 8 der Schmalprofil-Balustraden 7 montiert und so ausgerichtet, dass das von den Lichtleitern 4 empfangene Licht auf die stufenförmigen Plattformen 12 gestrahlt wird. In einer alternativen Ausführungsform könnten die passiven Lichtquellen 2 in Lichtauslässen 25 der Balustradeninnenseiten 26, der inneren bzw. äusseren Balustradenabdeckprofile oder Balustradendeckleisten 28 eingelassen sein.

Die Verwendung diskreter passiver Lichtquellen 2 führt normalerweise zu einer nicht-kontinuierlichen, ebenfalls diskreten Beleuchtung des Stufenbandes 14, die ein sehr lebhaftes Bild der stufenförmigen Plattformen 12 ergibt und zudem spezielle Lichteffekte ermöglicht. Andererseits weisen die Elemente der Beleuchtungseinrichtung auch in Normalbauweise geringe Abmessungen auf, sodass bei abstandsnaher oder gar bündiger Montage auch mit den diskreten passiven Lichtquellen 2 durchaus der Eindruck einer quasi-kontinuierlichen Beleuchtung erzielt werden kann.

Zur Erzielung besonderer lichttechnischer Effekte ist die Verwendung von farbigem oder polarisiertem Licht vorgesehen, wobei in beiden Fällen die Anforderungen an das Licht durch die Erfordernisse der Fahrtreppenbeleuchtung vorgegeben sind.

Anstatt einer einzigen zentralen, aktiven Lichtquelle 1 können auch mehrere aktive Lichtquellen eingesetzt werden, die bei Verwendung von farbigem Licht je einen diskreten Spektralbereich abdecken und über entsprechende Lichtleiteranschlüsse 1.3 den Lichtleitern 4 einzeln oder in Kombination zugeordnet sind. Andererseits kann eine farbige Beleuchtung auch mit einer einzigen breitbandigen aktiven Lichtquelle 1 erreicht werden, deren Licht mindestens die den gewünschten Farben entsprechenden Spektralbereiche enthält. Die einzelnen Farben werden dann mit einer, im Gehäuse 1.1 der aktiven Lichtquelle 1 nachgeschalteten Filtereinrichtung aus dem emitierten Licht herausgefiltert oder mittels Farbfiltern, welche in den integrierten Optiken der passiven Lichtquellen 2 je eine Lichtaustrittsfläche bilden, den einzelnen Beleuchtungspunkten 5 spektral zugeordnet.

Es ist für den Fachmann naheliegend, dass die Erfindung nicht auf eine Stufenbandbeleuchtung im Balustradensockel 29 beschränkt ist. Sie eignet sich generell zum lichttechnischen Nachrüsten bestehender Fahrtreppen und Fahrsteige, insbesondere solcher mit Schmalprofil-Balustraden 7, die unter dem Handlauf 11 nicht über das übliche, grossvolumige Profil verfügen. Als weitere Variante kann bei der zentralen, aktiven Lichtquelle 1 auf das Gehäuse 1.1 verzichtet werden und statt dessen die Leuchte 1.2 samt lichtreflektierender Spiegelfläche 1.4 als Teil des Lichtleiteranschlusses 1.3 ausgebildet sein.

## Patentansprüche

1. Beleuchtungsvorrichtung mit Lichtleitern (4) für Fahrtreppen oder Fahrsteige (6) welche ein bewegliches Stufen- bzw. Palettenband (14) enthalten und mindestens eine seitlich daneben angeordnete senkrechte Balustrade (7) sowie einen, an derem oberen Ende auf einer Schiene (10) geführten Handlauf (11) aufweisen, wobei mit mindestens teilweise entlang der Balustrade sich erstreckenden Lichtleitern, Licht von mindestens einer zentralen Lichtquelle (1) an Beleuchtungspunkte (5) an der Fahrtreppe oder dem Fahrsteig geführt wird, dadurch gekennzeichnet,
dass die Beleuchtungspunkte (5) passive Lichtquellen (2) mit je einer Montagevorrichtung (2.1), einer Lichtleiterfassung (2.2) und vorzugsweise einer integrierten Optik (2.3) sind, welche raumdiskret über die Anlage verteilt sind und je über einen als Glasfaser ausgebildeten diskreten Lichtleiter (4) mit dem Lichtleiteranschluss (1.3) einer zentralen, aktiven Lichtquelle (1) mit Leuchte (1.2), verbunden sind.

2. Beleuchtungsvorrichtung mit Lichtleitern nach Anspruch 1 dadurch gekennzeichnet,
dass die Glasfaser (4) mit dem Lichtleiteranschluss (1.3) der aktiven Lichtquelle (1) in einem Gehäuse (1.1) verbunden ist.

3. Beleuchtungsvorrichtung mit Lichtleitern nach Anspruch 1 dadurch gekennzeichnet,
dass mehrere aktive Lichtquellen (1) vorgesehen sind.

4. Beleuchtungsvorrichtung mit Lichtleitern nach Anspruch 1 dadurch gekennzeichnet,
dass die Leuchte (1.2) in der aktiven Lichtquelle (1) eine den Lichtstrom auf den Lichtleiteranschluss (1.3) lenkende, lichtreflektierende Spiegelfläche (1.4) aufweist.

5. Beleuchtungsvorrichtung mit Lichtleitern nach Anspruch 1 dadurch gekennzeichnet,
dass die passiven Lichtquellen (2) beidseits des beweglichen Stufen - oder Palettenbandes (14) unter den Handläufen (11) verdeckt angeordnet sind.

6. Beleuchtungsvorrichtung mit Lichtleitern nach Anspruch 1 dadurch gekennzeichnet,
dass die passiven Lichtquellen (2) beidseits des beweglichen Stufen - oder Palettenbandes (14) in Lichtauslässen (25) der Balustradeninnenseiten (26), der Sockelbleche (27) oder der äusseren Balustradendeckleisten (28) eingelassen sind.

7. Beleuchtungsvorrichtung mit Lichtleitern nach Anspruch 1 dadurch gekennzeichnet,
dass die diskreten Lichtleiter (4) zwischen der zentralen, aktiven Lichtquelle (1) und den passiven Lichtquellen (2) beidseits des beweglichen Stufenbandes (14) je zu einem strangförmigen, in den Sockelkanälen (23) der entsprechenden Balustraden (7) geführten Lichtleiterbündel (22) mit Abzweigungen (24) zusammengefasst sind.

8. Beleuchtungsvorrichtung mit Lichtleitern nach Anspruch 1 dadurch gekennzeichnet,
dass zur Erzielung lichttechnischer Effekte die Verwendung von farbigem oder polarisiertem Licht vorgesehen ist.

9. Beleuchtungsvorrichtung mit Lichtleitern nach Anspruch 8 dadurch gekennzeichnet,
dass das von der aktiven Lichtquelle (1) ausgesandte Licht ein breitbandiges Lichtgemisch ist und dass für dessen spektrale Zuordnung zu den einzelnen Beleuchtungspunkten (5) in den integrierten Optiken (2.3) der passiven Lichtquellen (2) je ein entsprechendes, eine Lichtaustrittsfläche bildendes Lichtfilter vorgesehen ist.

10. Beleuchtungsvorrichtung mit Lichtleitern nach Anspruch 9 dadurch gekennzeichnet,
dass die Lichtfilter in den integrierten Optiken (2.3) der passiven Lichtquellen (2) flache, konvexe Sammellinsen sind.

11. Beleuchtungsvorrichtung mit Lichtleitern nach Anspruch 8 dadurch gekennzeichnet,
dass im Gehäuse (1.1) eine Vielzahl, je einem diskreten Spektralbereich zugeordnete aktive Lichtquellen (1) vorgesehen sind, die über entsprechende Lichtleiteranschlüsse (1.3) je mit mindestens einem diskreten Lichtleiter (4) verbunden sind.

12. Beleuchtungsvorrichtung mit Lichtleitern nach Anspruch 8 dadurch gekennzeichnet,
dass im Gehäuse (1.1) eine der aktiven Lichtquelle (1) nachgeschaltete Filtereinrichtung (30) aus dem emittierten Licht bestimmte Spektralbereiche herausfiltert.

## Claims

1. Illuminating device with optical conductors (4) for escalators or moving walkways (6), which comprise a movable stair belt or pallet belt (14) and have at least one vertical balustrade (7) arranged laterally therebeside as well as a hand rail (11) guided at the upper end thereof on a rail (10), wherein light from at least one central light source (1) is guided to illumination points (5) along the escalator or the moving walkway by optical conductors extending at least partially along the balustrade, characterised in that the illumination points (5) are passive light sources (2), each with a respective assembly device (2.1), an optical conductor holder (2.2) and preferably an integrated optical system (2.3), which are distributed spatially discrete over the installation and each connected by way of a respective discrete optical conductor (4), which is constructed as glass fibre, with the optical conductor terminal (1.3) of a central active light source (1) with a lamp (1.2).

2. Illuminating device with optical conductors according to claim 1, characterised in that the glass fibre (4) is connected with the optical conductor terminal (1.3) of the active light source (1) in a housing (1.1).

3. Illuminating device with optical conductors according to claim 1, characterised in that several active light sources (1) are provided.

4. Illuminating device with optical conductors according to claim 1, characterised in that the lamp (1.2) in the active light source (1) comprises a light-reflecting mirror surface (1.4) steering the light flux to the optical conductor terminal (1.3).

5. Illuminating device with optical conductors according to claim 1, characterised in that the passive light sources (2) are arranged at both sides of the movable stair belt or pallet belt (14) and concealed below the hand rails (11).

6. Illuminating device with optical conductors according to claim 1, characterised in that the passive light sources (2) are let into light outlets (25) of the inward balustrade sides (26), the pedestal plates (27) or the outer balustrade cover strips (28) at both sides of the movable stair belt or pallet belt (14).

7. Illuminating device with optical conductors according to claim 1, characterised in that the discrete optical conductors (4) between the central active light source (1) and the passive light sources (2) are combined at both sides of the movable stair belt (14) each into a respective strand-shaped optical conductor bundle (22), which is guided in the pedestal channels (23) of the corresponding balustrades (7), with branches (24).

8. Illuminating device with optical conductors according to claim 1, characterised in that the use of coloured or polarised light is provided for the achievement of optical effects.

9. Illuminating device with optical conductors according to claim 8, characterised in that light emitted from the active light source (1) is a wide-band light mixture and that, for its spectral allocation to the individual illumination points (5), a respective corresponding light filter forming a light exit surface is provided in the integrated optical systems (2.3) of each of the passive light sources (2).

10. Illuminating device with optical conductors according to claim 9, characterised in that the light filters in the integrated optical systems (2.3) of the passive light sources (2) are flat convex condenser lenses.

11. Illuminating device with optical conductors according to claim 8, characterised in that a plurality of active light sources (1), which are each associated with a discrete spectral range and connected by way of corresponding optical conductor terminals (1.3) with at least one respective discrete optical conductor (4), is provided in the housing (1.1).

12. Illuminating device with optical conductors according to claim 8, characterised in that a filter equipment (30) arranged behind the active light source (1) in the housing (1.1) filters certain spectral ranges out of the emitted light.

## Revendications

1. Dispositif d'éclairage à fibres optiques (4) pour des escaliers roulants ou des trottoirs roulants (6) qui comportent une bande de marches ou de palettes mobile (14), au moins une balustrade verticale (7) disposée sur le côté de ladite bande et une main courante (11) guidée sur un rail (10), à l'extrémité supérieure de la balustrade, étant précisé qu'à l'aide de fibres optiques qui s'étendent au moins en partie le long de la balustrade, de la lumière est amenée d'au moins une source lumineuse centrale (1) à des points d'éclairage (5) situés sur l'escalier ou le trottoir roulant,
caractérisé en ce que les points d'éclairage (5) sont des sources lumineuses passives (2) qui comportent chacune un dispositif de montage (2.1), une monture de fibre optique (2.2) et de préférence un système optique intégré (2.3) qui sont répartis discrètement, dans l'espace, sur l'installation et qui sont reliés par une fibre optique discrète (4), conçue comme une fibre de verre, au raccordement de fibres optiques (1.3) d'une source lumineuse active centrale (1) comportant une lampe (1.2).

2. Dispositif d'éclairage à fibres optiques selon la revendication 1, caractérisé en ce que la fibre de verre (4) est reliée au raccordement de fibres optiques (1.3) de la source lumineuse active (1) dans un boîtier (1.1).

3. Dispositif d'éclairage à fibres optiques selon la revendication 1, caractérisé en ce qu'il est prévu plusieurs sources lumineuses actives (1).

4. Dispositif d'éclairage à fibres optiques selon la revendication 1, caractérisé en ce que la lampe (1.2) prévue dans la source lumineuse active (1) présente une surface réfléchissante (1.4) qui réfléchit la lumière et qui guide le courant lumineux vers le raccordement de fibres optiques (1.3).

5. Dispositif d'éclairage à fibres optiques selon la revendication 1, caractérisé en ce que les sources lumineuses passives (2) sont cachées sous les mains courantes (11), des deux côtés de la bande de marches ou de palettes mobile (14).

6. Dispositif d'éclairage à fibres optiques selon la revendication 1, caractérisé en ce que les sources lumineuses passives (2) sont encastrées, des deux côtés de la bande de marches ou de palettes mobile (14), dans des sorties de lumière (25) des côtés intérieurs de balustrade (26), des tôles de socle (27) ou des bordures de recouvrement de balustrade extérieures (28).

7. Dispositif d'éclairage à fibres optiques selon la revendication 1, caractérisé en ce que les fibres optiques discrètes (4) prévues entre la source lumineuse active centrale (1) et les sources lumineuses passives (2) sont réunies, de chaque côté de la bande de marches mobile (14), en un faisceau de fibres optiques (22) en forme de ligne qui passe dans les conduits de socle (23) des balustrades correspondantes (7) et qui présente des dérivations (24).

8. Dispositif d'éclairage à fibres optiques selon la revendication 1, caractérisé en ce qu'on prévoit d'utiliser une lumière colorée ou polarisée pour obtenir des effets d'éclairage.

9. Dispositif d'éclairage à fibres optiques selon la revendication 8, caractérisé en ce que la lumière émise par la source lumineuse active (1) est un mélange de lumière à large bande, et en ce que pour l'affectation spectrale de celui-ci aux différents points d'éclairage (5), il est prévu, dans les systèmes optiques intégrés (2.3) des sources lumineuses passives (2), des filtres de lumière respectifs correspondants qui définissent une surface de sortie de lumière.

10. Dispositif d'éclairage à fibres optiques selon la revendication 9, caractérisé en ce que les filtres de lumière prévus dans les systèmes optiques intégrés (2.3) des sources lumineuses passives (2) sont des lentilles convergentes convexes plates.

11. Dispositif d'éclairage à fibres optiques selon la revendication 8, caractérisé en ce qu'il est prévu dans le boîtier (1.1) une multiplicité de sources lumineuses actives (1) affectées chacune à une zone spectrale discrète, qui sont reliées chacune par des raccordements de fibres optiques (1.3) correspondants à au moins une fibre optique discrète (4).

12. Dispositif d'éclairage à fibres optiques selon la revendication 8, caractérisé en ce que dans le boîtier (1.1), un dispositif formant filtre (30) monté en aval de la source lumineuse active (1) filtre dans la lumière émise des zones spectrales définies.
